# EUROPEAN PATENT APPLICATION

(11) **EP 4 080 652 A1**
(43) Date of publication of application: **26.10.2022**
(21) Application number: 22168731.2
(22) Date of filing: 19.04.2022
(51) Int. Cl.: H01M 50/107, H01M 50/545, H01M 50/55, H01M 50/559

(54) **A CYLINDRICAL SECONDARY CELL**

(30) Priority: 22.04.2021 SE 2150506
(71) Applicant: Northvolt AB, 112 47 Stockholm (SE)
(72) Inventor: Makino, Tetsuya, 169 73 Solna (SE); Sexton, Brendan, 722 14 Västerås (SE); Shatani, Kenya, 118 49 Stockholm (SE)
(74) Representative: AWA Sweden AB

(57) **Abstract**

This disclosure presents a cylindrical secondary cell (1) comprising a cylindrical can (2) comprising a first end side (2a) and an opposite second end side (2b). The cell (1) further comprises a first terminal (3) and a second terminal (4) which are both arranged on the first end side (2a). The first terminal (3) comprises a first contact area (A3) and the second terminal (4) comprises a second contact area (A4). The first contact area (A3) covers 9 to 15 percent of the first end side area (A2) and the second contact area (A4) covers 60 to 92 percent of the first end side area (A2).

## Description

### TECHNICAL FIELD

The present disclosure generally pertains to cylindrical secondary cells, and more particularly to a positive and a negative terminal of such cells.

### BACKGROUND

In addressing climate change, there is an increasing demand for rechargeable batteries, e.g. to enable electrification of transportation and to supplement renewable energy. Currently, lithium-ion batteries are becoming increasingly popular. They represent a type of rechargeable battery in which lithium ions move from the negative electrode to the positive electrode during discharge and back when charging.

As the demand for rechargeable batteries increases, more and more focus is being placed on production speed. A rechargeable battery, often referred to as a secondary battery, typically comprises one or more secondary cells electrically connected to each other. To achieve an effective production of rechargeable batteries, the design of the cells and the batteries can be optimized.

### SUMMARY

It is in view of the above considerations and others that the embodiments of the present invention have been made. The present disclosure aims at providing secondary cells that allow efficient manufacture of batteries.

According to a first aspect, the present disclosure provides a cylindrical secondary cell comprising a cylindrical can comprising a first end side and an opposite second end side. The cylindrical secondary cell further comprises a first terminal and a second terminal which are both arranged on the first end side. The first terminal comprises a first contact area and the second terminal comprises a second contact area. The first contact area covers 9 to 15 percent of the first end side area and the second contact area covers 60 to 92 percent of the first end side area.

Such relatively large contact areas of both terminals provide a cylindrical secondary cell facilitating an effective production of rechargeable batteries, as the terminals are readily accessible for making contact. Further, since the terminals are positioned one the same end side, the cell is less likely to be aligned in the wrong direction, i.e. "upside down" in a battery. Having the terminals at the same side may further reduce the time needed to connect to both terminals.

Of course, as is readily understood by a skilled person, the first contact area together with the second contact area cannot cover more than 100 percent of the first end side area. In other words, the first contact area together with the second contact area covers 100 percent or less of the first end side area.

The first contact area may cover 10 to 15 percent of the first end side area and the second contact area may cover 60 to 92 percent of the first end side area. The first contact area may cover 10 to 15 percent of the first end side area and the second contact area may cover 65 to 92 percent of the first end side area. The first contact area may cover 9 to 15 percent of the first end side area and the second contact area may cover 65 to 92 percent of the first end side area.

The first contact area together with the second contact area may cover at least 70 percent, or even at least 75 percent, of the first end side area.

The first contact area may comprise a continuous first extension and the second terminal may comprise a continuous second extension. Each one of the extensions may be at least 20 percent of the diameter of the first end side. Each one of the extensions may be at least 25 percent of the diameter of the first end side. The first and second extensions are substantially equal, the deviation being less than 10 percent.

Such relatively large extensions of both terminals render the terminals readily accessible for making contact.

The cylindrical secondary cell may comprise an electrical isolator arranged between the first and second contact areas to form an isolating area on the first end side. The isolating area thus separating the first contact area from the second contact area. The isolating area may comprise a continuous isolating extension that is 2 to 5 percent of the diameter of the first end side.

The first contact area and the second contact area may be concentric.

The outer one of the first contact area and the second contact area may electrically contact a can side wall that extends from the first end side to the second end side.

The first contact area may be circular in shape and the second contact area may be annular in shape.

The first contact area may be the inner one and the second contact area may electrically contact the can side wall.

The first terminal may be a positive (cathode) terminal and the first contact area may be a positive terminal contact area. The second terminal may be a negative (anode) terminal and the second contact area may be a negative terminal contact area.

The first terminal or the second terminal may be arranged flush with the first end side. By flush is meant in the same plane, or in other words at the same axial height of the cylindrical secondary cell. The cylindrical secondary cell may extend along a longitudinal axis, and the height of the cylindrical secondary cell may be measured along that axis. The plane may be arranged normal to the longitudinal axis.

The second terminal may be formed by the first end side. The first terminal may protrude over the first end side a distance that corresponds to less than 5 percent of the diameter of the first end side.

According to a second aspect, a cylindrical secondary cell comprising a cylindrical can comprising a first end side and an opposite second end side is provided. The cylindrical secondary cell further comprises a first terminal and a second terminal which are both arranged on the first end side. The first terminal comprises a first contact area that comprises a continuous first extension, and the second terminal comprises a second contact area that comprises a continuous second extension. Each one of the extensions is at least 20 percent of the outer dimension of the cylindrical can.

Each one of the extensions may be at least 25 percent of the outer dimension of the cylindrical can, which may even further facilitate making contact.

The first extension may be 30 to 40 percent of the outer dimension of the cylindrical can. In particular 33 to 37 percent or approximately 35 percent. The second extension may be 22 to 32 percent of the outer dimension of the cylindrical can. In particular 25 to 30 percent or approximately 27 percent. Thus, the terminals may each occupy a relatively large portion of the first end side of the cylindrical can.

The isolating area may comprise a continuous isolating extension that is 2 to 5 percent of the diameter of the first end side.

The first end second extensions may be substantially equal. For example, the deviation between the first extension and second extension may be less than 10 percent.

The first contact area may be circular and the second contact area may be annular such that the second contact area comprises two continuous second extensions.

The extensions may together be at least 80 percent of the outer dimension of the cylindrical can.

By the expression "contact area" may be meant an area that is adapted to be contacted by a conductor. Such an area may be defined as an area accessible for electrical contact. When the cylindrical secondary cell is seen in a plan view of the first end side, the contact areas of the terminals may be defined as the visible areas of the terminals. The visible areas of the terminals may comprise rounded sections, such as rounded edges, and such sections may be less suitable to be contacted by a conductor and may thus not be included in the contact area.

By the expression "outer dimension of the cylindrical can" may be meant the transverse outer dimension of the cylindrical can. As has been mentioned, the cylindrical secondary cell may extend along a longitudinal axis, and the transverse outer dimension may then be measured in a plane that is normal to the longitudinal axis. The cylindrical can may be circular cylindrical and the outer dimension of the cylindrical can may be the diameter of the cylindrical can, more precisely the outer diameter of the cylindrical can.

By the expression "continuous extension" may be meant an extension, or length, that is uninterrupted. The extension runs straight across the contact area. The extension extends from one end of the contact area to an opposite end of the contact area. The extension may be measured along an imaginary line that passes the center of the contact area.

### BRIEF DESCRIPTION OF THE DRAWINGS

The embodiments disclosed herein are illustrated by way of example, and by not by way of limitation, in the figures of the accompanying drawings. Like reference numerals refer to corresponding parts throughout the drawings, in which
- Figure 1: shows a cylindrical secondary cell in perspective view,
- Figure 2: shows the cylindrical secondary cell with dimensions indicated, and
- Figure 3: illustrates the cylindrical secondary cell of figure 1 in a plan view from above.

### DETAILED DESCRIPTION

Embodiments of the present disclosure will now be described more fully hereinafter. The invention may, however, be embodied in many different forms and should not be construed as limited to the embodiments set forth herein; rather, these embodiments are provided by way of example so that this disclosure will be thorough and complete, and will fully convey the scope of the invention to those persons skilled in the art.

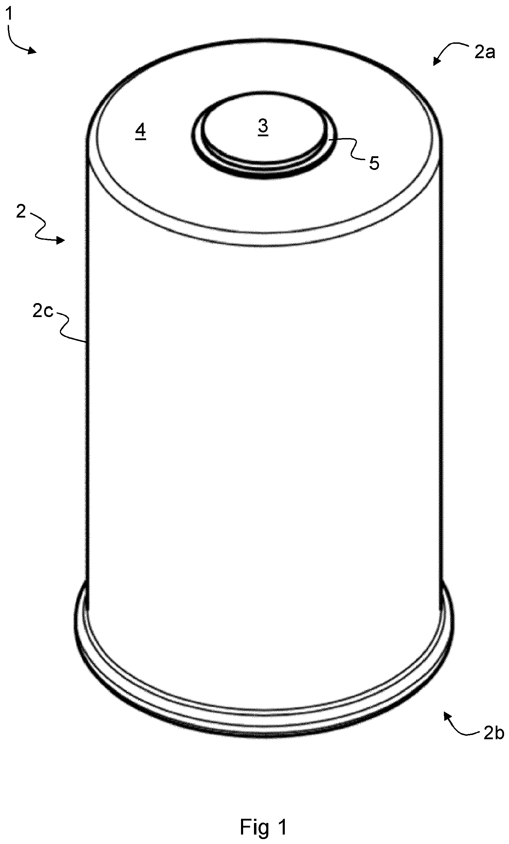

Figure 1 shows a cylindrical secondary cell 1 (hereinafter referred to as cell). In the exemplified embodiment, the cell is circular cylindrical and the height (along a longitudinal axis) is approximately 140 percent the diameter.

The cell 1 comprises a cylindrical can 2 having a first end side 2a and an opposite second end side 2b. A can wall 2c extends between the two end sides 2a, 2b. In the exemplified embodiment, the end sides 2a, 2b are circular. A first terminal 3 and a second terminal 4 are both arranged on the first end side 2a.

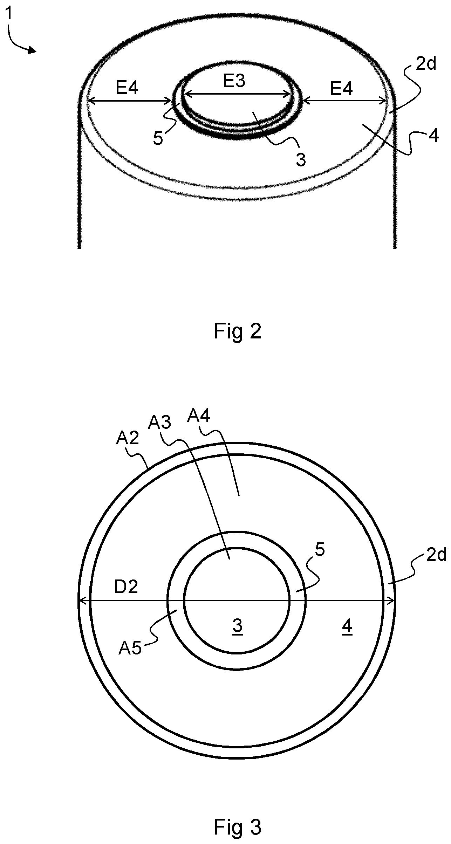

The can 2 has an outer dimension D2 that is indicated in figure 3. The outer dimension D2 of the can 2 may be referred to as the outer diameter of the can 2 or simply the can diameter. In this embodiment, the diameter of the can D2 equals the diameter of the first end side 2a.

Typically, to form a battery a number of cells 1 are arranged next to one another. Such a battery may be an electric vehicle battery. The respective terminals 3, 4 of the cells 1 may be electrically connected to one another and to main battery terminals. During manufacture of the battery, a respective conductor may be electrically connected to the respective terminals 3, 4.

For example, a conductor may be electrically connected to a terminal 3, 4 by the conductor being attached to the terminal 3, 4, for example by welding or soldering. As an alternative, a conductor may be pressed against the terminal by a resilient contacting assembly of the battery. In order to achieve an effective production of batteries, is may be advantageous to arrange the terminals on the same end side of the cell 1. It may further be advantageous to design the cell 1 such that the terminals cannot be confused with each other, and such that they are easily accessible.

Referring to figures 1 to 3, the first terminal 3 comprises a first contact area A3. In the present example, the first contact area A3 is circular. The first contact area A3 comprises a continuous first extension E3 that in the present example equals the diameter of the first contact area A3. The continuous first extension E3 is measured across the first contact area A3 along an imaginary line that passes the center of the first end side 2a.

The second terminal 4 comprises a second contact area A4. In the present example, the second contact A4 area is annular. The second contact area A4 comprises a continuous second extension E4. The second extension E4 equals the width of the annular second contact area A4, i.e. the distance between the outer and the inner radius of the annular second contact area A4. The continuous second extension E4 is measured across the first contact area A4 along an imaginary line that passes the center of the first end side 2a.

In the present embodiment, the first extension E3 is approximately 35 percent of the diameter D2 of the can 2. In the present embodiment, the second extension E4 is approximately 27 percent of the diameter D2 of the can 2.

A suitable range for the first extension E3 may be 30 to 40 percent of the can diameter D2. A suitable range for the second extension E4 may be 22 to 32 percent of the can diameter D2.

In one embodiment (not shown) the extensions are substantially equal. For example, the first extension E3 and the second extension E4 may be approximately 32 percent of the can diameter D2.

In any case, the each one of the extensions E3, E4 is at least 20 percent of the can diameter D2. The relatively large extensions of both terminals ensure that they are readily accessible for being electrically connected to by a conductor.

As is to be understood, the annular second contact area comprises two second extensions E4, see figure 2. In the preset embodiment, the sum of the first extension E3 and the two second extension E4 is 89 percent (35+27+27). Thus, approximately 90 percent of the can diameter D2 is offered as terminal.

In the present embodiment, the first contact area A3 covers approximately 12 percent of the can area A2. In the present embodiment, the second contact area A4 covers approximately 70 percent of the can area A2. Preferred ranges for the Thus, approximately 80 percent of the can area A2 is terminal area.

A suitable range for the first contact area A3 is 10 to 15 percent of the can area A2 when the second contact area A4 is 65 to 92 percent of the can area A2. A suitable range for the first contact area A3 is 9 to 15 or 10 to 15 percent of the can area A2. A suitable range for the second contact area A4 is 60 to 92 or 65 to 92 percent of the can area A2.

As is illustrated in figures 1-3, the cell 1 may comprise an electrical isolator 5 arranged between the first and second contact areas A3, A4 to form an isolating area A5 (indicated in figure 3) on the first end side 2a. In other words, the isolating area A5 separates the first contact area A3 from the second contact area A4.

In the present embodiment, the isolating area A5 is annular. In the present embodiment, the isolating area A5 may comprise a continuous isolating extension (the width of the annular isolating area A5) that is approximately 3 percent of the can diameter D2. A suitable range continuous isolating extension is 2 to 5 percent of the can diameter D2.

The electrical isolator 5 may extend in a region disposed axially between the first and second terminals 3, 4, as may be understood from figure 2. However, for the purpose of the present disclosure the exact arrangement of the isolator 5 is not necessary. The present disclosure focused on the relative sizes of the terminals 3, 4 that are available for connection to conductors.

As is shown, the first contact area A3 and the second contact area A4 may be concentric. The second contact area A4 surrounds the first contact area A3. The second, or outer, contact area A4 may electrically contact the can side wall 2c. In the present embodiment, the first end side 2a is provided in one piece with the can side wall 2c. The second end side 2b may be formed by a lid (not shown) that is attached to the can side wall 2c. The reverse situation is also possible, i.e. that the first end side 2a is formed by a lid and the second end side 2b is provided in one piece with the can side wall 2c.

The first, or inner, terminal 3 may be a positive terminal and thus the first, or inner, contact area A3 may be a positive terminal contact area. The second, or outer, terminal 4 may be a negative terminal and thus the second, or outer, contact area A4 may be a negative terminal contact area.

In the present embodiment, the outer terminal 4 is formed by the first end side 2a. The inner terminal 3 is formed by a terminal element that protrudes through the first end side 2a. The inner terminal 3 may protrude a distance that corresponds to approximately 3-5 percent the can diameter D2. The first end side 2 may be referred to as the terminal end of the cell 1. A cell 1 with a terminal end 2a having a first terminal 3 that protrudes less than 5 percent of the cell diameter and a second terminal 4 that is that is flush with the terminal end 2a may be space efficient.

As is indicated in the figures, the first end side 2a may comprise a rounded outer edge 2d. Thus the outer terminal 4 comprises a rounded edge, which may be less suitable to be contacted by a conductor. Further, it may be less desired to arrange a conductor at, or very close, to the edge of the cell 1. For these reasons, the edge 2d is not included in the outer contact are A4 (as is illustrates in figures 2 and 3).

Again, the present disclosure relates to a cell 1 of a type that has both a positive terminal 4 and a negative terminal 5 at one and the same end (the top end in figure 1) of the cell 1. The first enclosure end 2a may comprise a central terminal through-hole (not shown for the positive terminal 3. The negative terminal 4 is electrically connected to the cylindrical enclosure 2. More precisely, the negative terminal 4 is formed by the top surface of the cylindrical enclosure 2 that surrounds the terminal through-hole. Thus, the entire cylindrical enclosure 2 (apart from the positive terminal 3 at the top end) may be the negative terminal.

A cylindrical secondary cell having both terminals 3, 4 at one end may bring advantages as regards electrically connecting the cell to a load. Conductors electrically connecting the terminals to the load may be positioned on the same end, the terminal end, of the cell. The opposite end (the electrolyte-filling end) of the cell may be dedicated to electrolyte filling and gas venting. This disclosure does however not exclude filling of electrolyte at the terminal end. An overpressure may be generated within the cell during operation, in particular upon malfunction of the cell or of the load connected to the cell. Such malfunction may require a release of gas and/or electrolyte out of the cell, and it may be advantageous to direct the released gas and/or electrolyte away from the conductors.

For example, a number of cells may be positioned at a low position in an electric vehicle. The cells may be arranged with the terminal ends directed upwards and the electrolyte-filling ends directed downwards. Upon malfunction, for example resulting from a faulty electric vehicle charger or a faulty cell, a release of gas and/or electrolyte from the electrolyte-filling end(s) will be advantageously directed downwards towards the ground beneath the vehicle.

An electrode roll (not shown) may be arranged in the cylindrical enclosure 2. The electrode roll may alternatively be termed electrodes roll. Such an electrode roll comprises a first and a second conductive sheet and separating means. The separating means may also be termed separator. The conductive sheets and the separating means are rolled to form a circular cylindrical roll. The sheets are coated with electrode coatings and on assembly of the cell 1 the cylindrical enclosure 2 is filled with an electrolyte. The coatings on the conductive sheets act as cathode and anode, respectively. The cathode, anode and electrolyte provide electrochemical energy storage. This principle is known per se, and the electrode roll 3 is commonly referred to as a jelly roll.

The sheets of the electrode roll may be axially offset along the longitudinal axis of the electrode roll in relation to one another, and each may comprise an end section that is not coated with electrode coating. The respective ends of the electrode roll may be electrically connected to a respective assigned terminal 3, 4 of the cell 1. This design is known per se and commonly referred to as a tabless cell. In this disclosure, the connections between the conductive sheets and the terminals 3, 4 are not described.

Modifications and other variants of the described embodiments will come to mind to ones skilled in the art having benefit of the teachings presented in the foregoing description and associated drawings. Therefore, it is to be understood that the embodiments are not limited to the specific example embodiments described in this disclosure and that modifications and other variants are intended to be included within the scope of this disclosure.

For example, the cylindrical secondary cell is shown as being circular cylindrical. However, other cross-sections, such as a rounded square or a rounded rectangular cross-section, are also conceivable. Furthermore, the anode and the cathode may switch place.

Should the cell be of a rounded rectangular cross-section, and also the inner terminal be of a rounded rectangular shape, then the shortest side of the rounded rectangular first contact area would be the continuous first extension.

Furthermore, although specific terms may be employed herein, they are used in a generic and descriptive sense only and not for purposes of limitation. Therefore, persons skilled in the art would recognize numerous variations to the described embodiments that would still fall within the scope of the appended claims. As used herein, the terms "comprise/comprises" or "include/includes" do not exclude the presence of other elements or steps. Furthermore, although individual features may be included in different claims (or embodiments), these may possibly advantageously be combined, and the inclusion of different claims (or embodiments) does not imply that a certain combination of features is not feasible and/or advantageous. In addition, singular references do not exclude a plurality. Finally, reference numerals in the claims are provided merely as a clarifying example and should not be construed as limiting the scope of the claims in any way.

## Claims

1. A cylindrical secondary cell (1) comprising
- a cylindrical can (2) comprising a first end side (2a) and an opposite second end side (2b),
- a first terminal (3) and a second terminal (4) which are both arranged on the first end side (2a),
- the first terminal (3) comprising a first contact area (A3), and
- the second terminal (4) comprising a second contact area (A4),
wherein the first contact area (A3) covers 9 to 15 percent of the first end side area (A2) and the second contact area (A4) covers 60 to 92 percent of the first end side area (A2).

2. The cylindrical secondary cell (1) of claim 1, wherein the first contact area (A3) covers 10 to 15 percent of the first end side area (A2) and the second contact area (A4) covers 60 to 92 percent of the first end side area (A2).

3. The cylindrical secondary cell (1) of claim 1, wherein the first contact area (A3) covers 9 to 15 percent of the first end side area (A2) and the second contact area (A4) covers 65 to 92 percent of the first end side area (A2).

4. The cylindrical secondary cell (1) of any preceding claim, wherein the first contact area (A3) together with the second contact area (A4) cover at least 70 percent of the first end side area (A2).

5. The cylindrical secondary cell (1) of any preceding claim, wherein the first contact area (A3) together with the second contact area (A4) cover at least 75 percent of the first end side area (A2).

6. The cylindrical secondary cell (1) of any preceding claim, wherein
- the first contact area (A3) comprises a continuous first extension (E3), and
- the second terminal (4) comprises a continuous second extension (E4),
wherein each one of the extensions (E3, E4) is at least 20 percent of the diameter of the first end side (2a).

7. The cylindrical secondary cell (1) of claim 6, wherein each one of the extensions (E3, E4) is at least 25 percent of the diameter of the first end side (2a).

8. The cylindrical secondary cell (1) of claim 6 or 7, wherein the first and second extensions (E3, E4) are substantially equal, the deviation being less than 10 percent.

9. The cylindrical secondary cell (1) of any preceding claim, comprising an electrical isolator (5) arranged between the first and second contact areas (A3, A4) to form an isolating area (A5) on the first end side (2a) separating the first contact area (A3) from the second contact area (A4).

10. The cylindrical secondary cell (1) of any preceding claim, wherein the first contact area (A3) and the second contact area (A4) are concentric and the outer one of the first contact area (A3) and the second contact area (A4) electrically contacts a can side wall (2c) that extends from the first end side (2a) to the second end side (2b).

11. The cylindrical secondary cell (1) of claim 10, wherein the first contact area (A3) is circular in shape and the second contact area (A4) is annular in shape.

12. The cylindrical secondary cell (1) of claim 10 or 11, wherein the first contact area (A3) is the inner one and the second contact area (A4) electrically contacts the can side wall (2c).

13. The cylindrical secondary cell (1) of any preceding claim, wherein the first terminal (3) is a positive terminal and the first contact area (A3) is a positive terminal contact area and the second terminal (4) is a negative terminal and the second contact area (A4) is an negative terminal contact area.

14. The cylindrical secondary cell (1) of any preceding claim, wherein the first terminal (3) or the second terminal (4) is arranged flush with the first end side (2a).

15. The cylindrical secondary cell (1) of any preceding claim, wherein the second terminal (4) is formed by the first end side (2a), and the first terminal (3) protrudes over the first end side (2a) a distance that corresponds to less than 5 percent of the diameter of the first end side (2a).
